# EUROPEAN PATENT APPLICATION

(11) **EP 3 663 075 A1**
(43) Date of publication of application: **10.06.2020**
(21) Application number: 18841432.0
(22) Date of filing: 20.03.2018
(51) Int. Cl.: B29C 65/02, B29C 65/48

(54) **RESIN-METAL COMPOSITE, METHOD FOR PREPARING RESIN-METAL COMPOSITE, AND METHOD FOR DISMANTLING RESIN-METAL COMPOSITE**

(30) Priority: 01.08.2017 JP 2017149424
(71) Applicant: Hitachi, Ltd., Tokyo 100-8280 (JP)
(72) Inventor: KAGAWA,Hiroyuki, Tokyo 100-8280 (JP); HOUJYOU, Fusao, Tokyo 100-8280 (JP); ISHII, Toshiaki, Tokyo 100-8280 (JP); KONDO, Takeshi, Tokyo 100-8280 (JP); SUWA, Yuji, Tokyo 100-8280 (JP)
(74) Representative: MERH-IP Matias Erny Reichl Hoffmann Patentanwälte PartG mbB
(86) International application number: PCT/JP2018/011226
(87) International publication number: WO 2019/026331

(57) **Abstract**

Provided is a resin-metal composite (10) which is provided with: a metal member (2) ; and a resin member (1) that joins to the metal member (2) and has a dynamic covalent bond which is capable of reversibly dissociating and bonding with regard to a functional group present on the surface of the metal member (2). The resin-metal composite (10) is obtained by overlapping and heating the metal member (2) and the resin member (1). Furthermore, the resin-metal composite (10) is dismantled by heating a joint portion between the metal member (2) and the resin member (1) in the resin-metal composite (10) .

## Description

### Technical Field

The present invention relates to a resin-metal composite, a method for preparing a resin-metal composite, and a method for dismantling a resin-metal composite.

### Background Art

Reduction in weight of moving bodies such as automobiles, aircrafts and railroad vehicles is being promoted with environmental regulations and energy-saving measures. In particular, attempts are being extensively made to achieve reduction in weight by using resin members including resins (which may be fiber-raiforced plastics (FRPs)) (the same applies hereinafter) instead of members which have been heretofore prepared using metals. However, a resin member alone is often insufficient in strength, durability and the like. Thus, resin-metal composites are often formed in which the resin member and a metal member including a metal are joined together. In the resin-metal composite, the members join together firmly at the time of use (the concept of "join" includes "adhesion") .

As a technique for joining a resin member and a metal member to each other, a technique disclosed in PTL 1 is known. PTL 1 discloses an aluminum-covered fiber-reinforced plastic molded product in which an aluminum sheet is joined to at least one surface of a fiber-reinforced plastic molded product composed of a reinforcing fiber and a matrix resin. In the aluminum-covered fiber-reinforced plastic molded product, at least a surface of the aluminum sheet, the surface which contacts the fiber-reinforced plastic, is chemically roughened, and the thickness of the roughened layer is less than 2 µm. In addition, PTL 1 discloses an aluminum-covered fiber-reinforced plastic molded product in which the matrix resin component is mainly a flame-retardant heat resistant super engineering plastic resin having a limiting oxygen index of 25 or more and a softening temperature of 200°C or higher.

### Citation List

### Patent Literature

PTL 1: JP 2014-148113 A

### Summary of Invention

### Technical Problem

In the technique disclosed in PTL 1, joining strength between a resin member and a metal member is enhanced by roughening a surface of the metal member which joins to the resin member (in particular, see paragraph [0015] in PTL 1). Here, from the viewpoint of environmental regulations and the like in recent years, it is preferable that a resin-metal composite discarded because of having been used is dismantled by separating a resin member and a metal member from each other. This facilitates subsequent recycling.

However, in the resin-metal composite disclosed in PTL 1, a dismantling property is not considered. That is, in the technique disclosed in PTL 1, it may be difficult to dismantle the resin-metal composite by separating the resin member and the metal member from each other while securing the high joining strength between the resin member and the metal member.

The present invention has been made in view of these circumstances, and an object to be achieved by the present invention is to provide a resin-metal composite capable of attaining both high joining strength and a high dismantling property; a method for preparing a resin-metal composite; and a method for dismantling a resin-metal composite.

### Solution to Problem

The present inventors have extensively conducted studies for achieving the above-described object. As a result, the present inventors have arrived at the following findings, leading to completion of the present invention. Accordingly, the subject matter of the present invention relates to a resin-metal composite including a metal member, and a resin member that joins to the metal member and has a dynamic covalent bond capable of reversibly dissociating and bonding with regard to a functional group present on the surface of the metal member. Other solutions will be described in Description of Embodiments below.

### Advantageous Effects of Invention

According to the present invention, it is possible to provide a resin-metal composite capable of attaining both high joining strength and a high dismantling property; a method for preparing a resin-metal composite; and a method for dismantling a resin-metal composite.

### Brief Description of Drawings

[FIG. 1] FIG. 1 is a perspective view of a resin-metal composite according to a first embodiment.
[FIG. 2] FIG. 2 is a diagram showing the action of a functional group of a resin member and a functional group of a metal member in the resin-metal composite according to the first embodiment, where the resin member and the metal member are joined together.
[FIG. 3] FIG. 3 shows a method for preparing the resin-metal composite according to the first embodiment.
[FIG. 4] FIG. 4 is a diagram illustrating the surface configurations of the resin member and the metal member which are used in production of the resin-metal composite according to the first embodiment.
[FIG. 5] FIG. 5 shows a method for dismantling the resin-metal composite according to the first embodiment.
[FIG. 6] FIG. 6 is a perspective view of a resin-metal composite according to a second embodiment.
[FIG. 7] FIG. 7 is a perspective view of a resin-metal composite according to a third embodiment.

### Description of Embodiments

Hereinafter, embodiments of the present invention (present embodiments) will be described with reference to the drawings as appropriate. In each drawing, the same members are given the same symbols, and duplication of description is avoided.

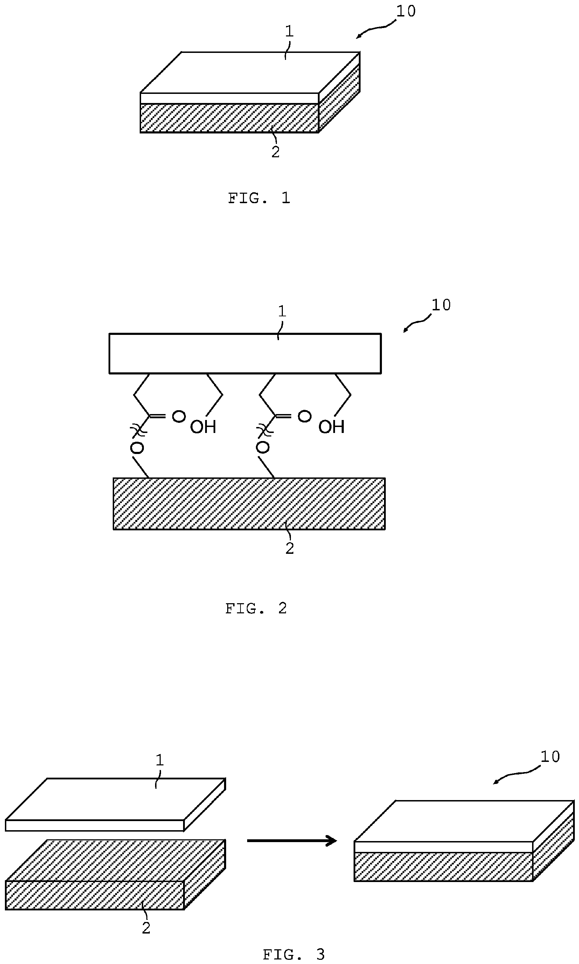

FIG. 1 is a perspective view of a resin-metal composite 10 according to a first embodiment. The resin-metal composite 10 includes a resin member 1 having a covalent bond which reversibly dissociates and bonds (hereinafter, referred to as a dynamic covalent bond) ; and a metal member 2. The resin member 1 and the metal member 2 are joined together by forming a dynamic covalent bond between a functional group present on a surface of the resin member 1 and a functional group present on a surface of the metal member 2.

The resin member 1 preferably has a structure in which a monomer that forms an ester bond at the time of curing, or an ester bond as a monomer skeleton is present. The monomer that forms an ester bond at the time of curing preferably includes, for example, an epoxy compound having a polyfunctional epoxy group, as well as a carboxylic anhydride or a polycarboxylic acid. As the epoxy compound having a polyfunctional epoxy group, for example, bisphenol A-type resins, novolac-type resins, alicyclic resins, and glycidylamine resins are preferable. Further specific examples of the epoxy compound include, but are not limited to, bisphenol A diglycidyl ether phenol, bisphenol F diglycidyl ether, bisphenol S diglycidyl ether, resorcinol diglycidyl ether, hexahydrobisphenol A diglycidyl ether, polypropylene glycol diglycidyl ether, neopentyl glycol diglycidyl ether, phthalic acid diglycidyl ester, dimer acid diglycidyl ester, triglyceride isocyanurate, tetraglycidyl diaminodiphenylmethane, tetraglycidyl metaxylenediamine, cresol novolac polyglycidyl ether, tetrabromobisphenol A diglycidyl ether and bisphenol hexafluoroacetone diglycidyl ether.

Examples of the carboxylic anhydride or polycarboxylic acid include, but are not limited to, phthalic anhydride, tetrahydrophthalic anhydride, hexahydrophthalic anhydride, methyltetrahydrophthalic anhydride, 3-dodecenylsuccinic anhydride, octenylsuccinic anhydride, methylhexahydrophthalic anhydride, methylnadic anhydride, dodecylsuccinic anhydride, chlorendic anhydride, pyromellitic anhydride, benzophenonetetracarboxylic anhydride, ethylene glycol bis(anhydrotrimate), methylcyclohexenetetracarboxylic anhydride, trimellitic anhydride, polyazelaic anhydride, ethylene glycol bisanhydrotrimellitate, 1,2,3,4-butanetetracarboxylic acid, 4-cyclohexene-1,2-dicarboxylic acid, and polyvalent fatty acid.

The resin member 1 may contain a vinyl monomer having a hydroxyl group, an ester group and two or more vinyl groups, and a polymerization initiation catalyst for polymerizing the vinyl monomer.

Specific examples of the vinyl monomer include, but are not limited to, 2-hydroxy methacrylate, hydroxypropyl methacrylate, 4-hydroxybutyl acrylate, divinylethylene glycol, monomethyl fumarate, hydroxypropyl acrylate, ethyl 2-(hydroxymethyl)acrylate, glycerol dimethacrylate, allyl acrylate, methyl crotonate, methyl methacrylate, methyl 3,3-dimethacrylate, diethylene glycol dimethacrylate, ethylene glycol dimethacrylate, triethylene glycol dimethacrylate, dimethyl fumarate, fumaric acid, 1,4-butanediol dimethacrylate 1,6-hexanediol dimethacrylate, 1,3-butanediol dimethacrylate, tetraethylene glycol dimethacrylate, tetraethylene glycol diacrylate, vinyl crotonate, crotonic anhydride, diallyl maleate, neopentyl glycol diacrylate, neopentyl glycol dimethacrylate, trimethylolpropane triacrylate, trimethylolpropane trimethacrylate, bisphenol A glycerolate dimethacrylate.

Examples of the polymerization initiation catalyst include peroxide polymerization initiators and azo compound polymerization initiators, and specific examples thereof include, but are not limited to, azo compounds such as 2,2'-azobisisobutyronitrile, 2,2'-azobis(2,4-dimethylvaleronitrile), 2,2'-azobis(2,4-dimethyl-4-methoxyvaleronitrile), 1,1'-azobis(cyclohexanecarbonitrile) and 2,2'-azobis(2,4,4-trimethylpentane); dialkyl peroxides such as di-t-butyl peroxide, di-t-hexyl peroxide and dicumyl peroxide; peroxyketals such as 1,1-bis(t-butylperoxy)cyclohexane, 1,1-bis(t-butylperoxy)-3,3,5-trimethylcyclohexane and 2,2-bis(4,4-di-t-butylperoxycyclohexyl)propane; peroxyesters such as t-butyl peroxybenzoate, t-hexyl peroxybenzoate, t-butyl peroxyacetate, t-butyl peroxylaurate and t-hexyl peroxyneodecanoate; diacyl peroxides such as benzoyl peroxide and lauroyl peroxide; and peroxycarbonates such as t-butyl peroxyisopropylmonocarbonate, t-hexyl peroxyisopropylmonocarbonate, di-n-propylperoxydicarbonate, diisopropyl peroxydicarbonate and di-2-ethylhexyl peroxydicarbonate.

In addition, the resin member 1 usually contains a transesterification catalyst that causes recombination of dynamic covalent bonds (changes functional groups to be bonded) . The transesterification reaction catalyst is preferably a catalyst that is uniformly dispersed in a mixture and promotes the transesterification reaction. Examples thereof include, but are not limited to, zinc acetate (II), zinc (II) acetylacetonate, zinc naphthenate (II), acetylacetone iron (III), acetylacetone cobalt (II), acetylacetone cobalt (III), aluminum isopropoxide, titanium isopropoxide, methoxide(triphenylphosphine) copper (I) complexes, ethoxide(triphenylphosphine) copper (I) complexes, propoxide(triphenylphosphine) copper (I) complexes, isopropoxide(triphenylphosphine) copper (I) complexes, methoxidebis(triphenylphosphine) copper (II) complexes, ethoxidebis(triphenylphosphine) copper (II) complexes, propoxidebis(triphenylphosphine) copper (II) complexes, isopropoxidebis(triphenylphosphine) copper (II) complexes, tris(2,4-pentanedionato) cobalt (III), cobalt (II) naphthenate, cobalt (II) stearate, tin diacetate (II), tin (II) di(2-ethylhexanoate), N,N-dimethyl-4-aminopyridine, diazabicycloundecene, diazabicyclononene, triazabicyclodecene, triphenylphosphine, 2-phenylimidazole, 2-phenyl-4-methylimidazole, 1-benzyl-2-phenylimidazole and 1-cyanoethyl-2-phenylimidazole.

Further, the resin member 1 shown in FIG. 1 may be a thermoplastic resin containing a crosslinking component having a dynamic covalent bond. Examples of the thermoplastic resin that can be used include, but are not limited to, polyethylene, polypropylene, polystyrene, polyvinyl chloride, polyethylene terephthalate and acrylic resins. Examples of the crosslinking component contained in the thermoplastic resin include, but are not limited to, crosslinking components having an alkoxyamine skeleton, a diarylbibenzofuran skeleton or a dioxaborane skeleton.

Further, the resin member 1 may contain a fiber. That is, the resin member 1 may be a fiber-raiforced plastic (FRP) having a dynamic covalent bond. When the resin member 1 contains a fiber, the strength and rigidity of the resin member 1 can be improved.

Examples of the fiber that can be contained in the resin member 1 include carbon fibers, glass fibers, and aramid fibers, and the fiber may be any of a unidirectionally continuous fiber, a fabric of continuous fiber, a staple fiber, and a filament fiber. Examples of the method for preparing the resin member 1 containing a fiber include a method in which fibers impregnated with a resin are stacked, and pressed and heated; a method in which a resin is injected into a mold in which a fiber is laid, and heated; and a method in which fiber is mixed in a resin, and the mixture is subjected to injection molding.

Further, as the resin member 1, a plurality of resins containing a fiber (fiber-raiforced plastics) may be stacked. The resin member 1 is a resin having a dynamic covalent bond as described above. Therefore, the resin is different from a conventional fiber-raiforced plastic using a thermosetting resin in that when heated, a plurality of stacked fiber-raiforced plastics are chemically bonded even after curing. This ensures that strength between fiber-raiforced plastics can be enhanced.

The metal member 2 included in the resin-metal composite 10 shown in FIG. 1 is a metal that is used in, for example, automobiles, airplanes, and railway vehicles, and may be a single metal such as aluminum or iron, or a compound containing the metal, as well as an alloy such as stainless steel (SUS304 and the like).

The shape of the metal member 2 is a flat plate shape in FIG. 1, but the metal member 2 that is processed or formed into an arbitrary shape may be used. The resin-metal composite 10 may be prepared using the metal member 2 that is processed or shaped in advance, or may be prepared by arbitrarily processing and shaping an integrated product of the resin member 1 and the metal member 2, which is obtained by, for example, sticking the flat plate-shaped metal member 2 to the flat plate-shaped resin member 1.

In addition, the surface of the metal member 2 may be supplementarily subjected to natural oxidation or oxidation treatment. When the surface of the metal member 2 is subjected to natural oxidation or oxidation treatment, a hydroxyl group can be reliably introduced to the surface of the metal member 2. This ensures that when the introduced hydroxyl group is chemically bonded to the resin member 1, that is, when transesterification occurs, the hydroxyl group on the surface of the metal member 2 reacts with the ester group to more firmly adhere the resin member 1 and the metal member 2 to each other. The surface of the metal member 2 is usually oxidized, and therefore a hydroxyl group is present on the surface. Thus, the resin member 1 and the metal member 2 can join together by making use of a dynamic covalent bond without intentionally performing oxidation treatment.

The resin member 1 and the metal member 2 can be pressure-bonded together using bolts, screws, rivets or the like for enhancement of the joining.

FIG. 2 is a diagram showing the action of a functional group of the resin member 1 and a functional group of the metal member 2 in the resin-metal composite 10 according to the first embodiment, where the resin member 1 and the metal member 2 are joined together. The resin member 1 has a dynamic covalent bond as described above. Specifically, in the example shown in FIG. 2, an ester bond is formed between the carboxyl group that is included in the resin member 1 and the hydroxyl group that is included in the metal member 2 to join the resin member 1 and the metal member 2. This ester bond is the aforementioned dynamic covalent bond, and is reversibly cut (and bound) at a part shown with a double wavy line in FIG. 2.

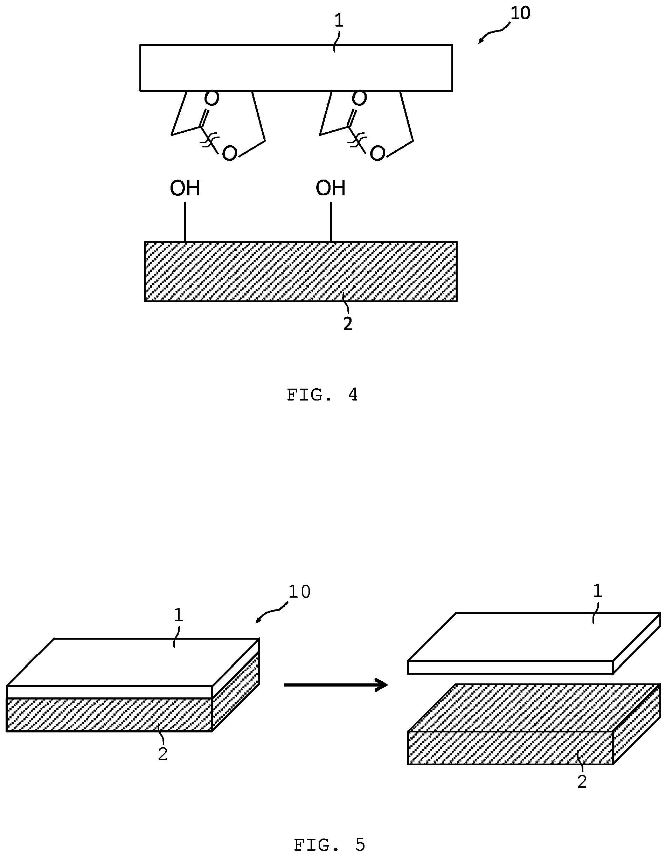

FIG. 3 is a method for preparing the resin-metal composite 10 according to the first embodiment. The resin-metal composite 10 is prepared by, for example, superposing the flat plate-shaped resin member 1 and the flat plate-shaped metal member 2 on each other and then heating. Here, the surface configurations of the resin member 1 and the metal member 2 will be described with reference to FIG. 4.

FIG. 4 is a diagram illustrating the surface configurations of the resin member 1 and the metal member 2 which are used in production of the resin-metal composite 10 according to the first embodiment. On the surface of the resin member 1, a plurality of ester bonds capable of being reversibly cut (and bound) at C-O bonds (double wavy line parts in FIG. 4) forming ester groups is present as dynamic covalent bonds. These bonds are cut by, for example, heating. On the other hand, hydroxyl groups are present on the surface of the metal member 2.

When the resin member 1 and the metal member 2 having the above-mentioned surfaces are superposed on each other (brought into contact with each other), and heated, the covalent bond of ester groups present on the surface of the resin member 1 is cut as described above. The cutting is performed at parts shown with the double wavy line in FIG. 4. Carbonyl groups generated by cutting the covalent bond have unpaired electrons, and hence high reactivity. Thus, the carbonyl groups generated on the surface of the resin member 1 are bonded to hydroxyl groups present on the surface of the metal member 2. Accordingly, the resin member 1 and the metal member 2 join together as described with reference to FIG. 2.

FIG. 5 shows a method for dismantling the resin-metal composite 10 according to the first embodiment. The method shown in FIG. 5 can be applied for separating the resin member 1 and the metal member 2 from each other at the time when the resin-metal composite 10 is discarded because of having been used.

When a joining part between the resin member 1 and the metal member 2, of the resin-metal composite 10, (the whole of the resin-metal composite 10 in the example shown in FIG. 5) is heated, bonds at a part shown with the double wavy line in FIG. 2 are cut among ester bonds formed between the resin member 1 and the metal member 2. Accordingly, the bonding force between the resin member 1 and the metal member 2 is eliminated, so that joining between the resin member 1 and the metal member 2 is released. As a result, the resin member 1 can be easily peeled from the metal member 2. That is, joining between these members is released by heating. As a result, the resin member 1 can be easily peeled and separated from the metal member 2, so that the resin-metal composite 10 can be easily dismantled. Therefore, the resin-metal composite 10 can be easily recycled.

In the resin member 1 after separation, a carbonyl group having unpaired electrons is present. The carbonyl group has high reactivity as described above, and therefore bonds to the hydroxyl group present on the surface of the resin member 1. Accordingly, a new ester group is generated on the surface of the resin member 1, and the surface turns back into the state shown in FIG. 4.

The heating described with reference to FIGS. 2 to 5 (heating for joining and heating for separation) can be performed by an arbitrary method. For example, overall heating may be performed using a thermostatic chamber or the like, or partial heating may be performed by applying microwaves or infrared rays to a desired position. Further, for example, a metal plate heated using an electric heater or the like may be pressed to a desired position to perform heating.

At the time of joining, heating may be performed while pressing is performed (a pressing force is applied) in a direction along which the resin member 1 and the metal member 2 are stacked, or heating may be performed without pressing. When heating is performed without pressing, for example, pressing may be performed after heating. On the other hand, at the time of separation, heating may be performed while a pulling force is applied in a direction along which the resin member 1 and the metal member 2 are stacked, or heating may be performed without applying such a force. When heating is performed without applying such a force, these members can be separated from each other by applying a pulling force after heating.

The heating temperature varies depending on the material composition and the blending ratio of the resin member 1, but is, for example, about 150°C to 300°C. The heating time may be, for example, 1 hour to 10 hours. The heating temperature and the heating time at the time of joining the resin member 1 and the metal member 2 to each other may be identical to or different from the heating temperature and the heating time at the time of separating these members from each other.

The heating described with reference to FIGS. 2 to 5 may be performed by leaving the resin-metal composite 10 in a high-temperature and high-humidity environment. In particular, when the resin-metal composite is exposed to high humidity, hydrolysis of ester bonds is promoted by moisture in the air, so that the resin member 1 and the metal member 2 can be more easily joined and separated.

Specific conditions of the high-temperature and high-humidity environment are not particularly limited, and for example, the relative humidity can be set to 60% to 95% at 100°C to 200°C. The treatment time in a high-temperature and high-humidity environment can be set to, for example, 3 hours to 20 hours. The specific conditions of the high-temperature and high-humidity environment at the time of joining the resin member 1 and the metal member 2 to each other may be identical to or different from the specific conditions of the high-temperature and high-humidity environment at the time of separating these members from each other.

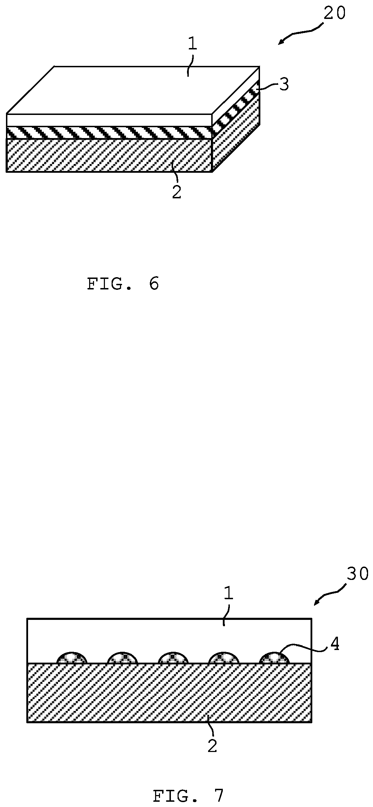

FIG. 6 is a perspective view of a resin-metal composite 20 according to a second embodiment. The resin-metal composite 20 includes a resin member 1 and a metal member 2 as in the resin-metal composite 10 described above. However, in the resin-metal composite 20 shown in FIG. 6, an adhesive layer 3 is formed between the resin member 1 and the metal member 2, and these members are joined with the adhesive layer interposed therebetween. Therefore, in this resin-metal composite 20, the resin member 1 and the metal member 2 are joined together not only by the above-mentioned action occurring between the resin member 1 and the metal member 2 (see FIG. 2) but also by the adhesive layer 3.

The adhesive layer 3, which supplementarily joins the resin member 1 and the metal member 2 to each other, includes various resins such as epoxy-based resins, acryl-based resins, urethane-based resins and silicone-based resins. Preferably, the adhesive layer 3 contains a dynamic covalent bond. When a dynamic covalent bond is present, the action described with reference to FIG. 2 can be caused to occur between the resin member 1 and the adhesive layer 3. Accordingly, the resin member 1 and the adhesive layer 3 can join to each other more firmly, and the resin member 1 including the adhesive layer 3 and the metal member 2 can be more easily separated from each other. As the resin containing a dynamic covalent bond, for example, a resin identical to the resin that forms the resin member 1 can be used.

FIG. 7 is a perspective view of a resin-metal composite 30 according to a third embodiment. The resin-metal composite 30 includes a resin member 1 and a metal member 2 as in the resin-metal composites 10 and 20 described above. However, in the resin-metal composite 30 shown in FIG. 7, a coupling agent 4 is provided between the resin member 1 and the metal member 2, and these members are joined with the coupling agent 4 interposed therebetween.

In the coupling agent 4, a coupling group (an epoxy group and the like) which can bond to a dynamic covalent bond of the resin member 1 is disposed on the surface of the metal member 2. Therefore, in this resin-metal composite 30, not only the above-mentioned action occurring between the resin member 1 and the metal member 2 (see FIG. 2) but also action occurring between the coupling agent 4 disposed on the metal member 2 and the resin member 1 is utilized. Accordingly, the resin member 1 and the metal member 2 can join to each other more firmly, and the resin member 1 and the metal member 2 including the coupling agent 4 can be more easily separated from each other.

As the coupling agent 4, for example, an alkoxysilane having a functional group capable of forming a chemical bond with the resin member 1, such as an epoxy group, a hydroxyl group or an acid anhydride group, can be used. Examples of the alkoxysilane include 3-glycidoxypropyltrimethoxysilane. As a method for disposing the coupling agent 4 on the metal member 2, for example, the coupling agent 4 is diluted with an arbitrary organic solvent, and the metal member 2 is immersed in the solution, whereby the coupling agent 4 can be disposed on the surface of the metal member 2.

### Examples

Hereinafter, the present invention will be described in further detail with reference to examples.

### <Example 1>

A resin composition (resin member) was prepared in accordance with the method described in Example 1 in Japanese Patent No. 5749354. Specifically, first, 10.7 g of DER332 epoxy resin (manufactured by The Dow Chemical Company) and 0.81 g of zinc (II) acetylacetonate were put in a beaker. Further, 3.5 g of glutaric anhydride was added, the beaker was placed in a thermostatic bath and heated, and the mixture was mixed until the mixture was completely dissolved. The homogenized solution was then poured into a tetrafluoroethylene mold, and heated and pressed at 140°C for 8 hours to prepare a flat plate-shaped resin composition as a resin member. The prepared resin member is superposed on an aluminum plate (metal member), heated and simultaneously pressed at 200°C for 3 hours, and naturally cooled to room temperature to obtain a resin-metal composite having the shape shown in FIG. 1.

In trying to insert a metallic blade at the boundary between the resin member and the metal member in this resin-metal composite, the blade did not enter the inside of the resin-metal composite. In trying to peel the resin member from the metal member by hand, the resin member and the metal member were not peeled from each other because they were firmly joined together. Therefore, it was confirmed that in the resin-metal composite prepared here, the resin member and the metal member were firmly joined together.

The prepared resin-metal composite was placed in a thermostatic bath, and heated overall at 200°C for 1 hour. Immediately after the heating for 1 hour, a metallic blade was inserted at the boundary between the resin member and the metal member. As a result, the blade easily entered the inside of the resin-metal composite, and it was possible to easily peel the resin member from the metal member. Therefore, it was confirmed that in the resin-metal composite, the resin member and the metal member were firmly joined together before heating, but were easily peeled from each other when heated.

### <Example 2>

First, a liquid varnish as described in Example 1 in WO 2016/178345 A was prepared. Specifically, 3.0 g of styrene (manufactured by Tokyo Chemical Industry Co., Ltd., polystyrene is obtained by polymerization), 3.0 g of bisphenol A glycerolate dimethacrylate (manufactured by Sigma-Aldrich Co. LLC), 0.77 g of 2-hydroxymethacrylate, 0.11 g of a peroxide polymerization initiator CT50 (manufactured by Hitachi Chemical Company, Ltd.) and 0.32 g of zinc naphthenate (II) (manufactured by Tokyo Chemical Industry Co., Ltd.) were put in a glass screw bottle. The reagents in the screw bottle were stirred using the mix rotor, thereby preparing a homogeneous liquid varnish.

A cloth knitted in a woven form with carbon fiber was impregnated with the prepared liquid varnish. After the impregnation, the varnish was dried to obtain a cloth impregnated with the resin. Four sheets of the obtained cloth were stacked, and heated and simultaneously pressed at 120°C for 4 hours, and then cooled to room temperature to prepare a fiber-raiforced plastic as a resin member. The prepared resin member was superposed on an aluminum plate (metal member), heated and simultaneously pressed at 120°C for 3 hours, and naturally cooled to room temperature to obtain a resin-metal composite having the shape shown in FIG. 1.

In trying to insert a blade in the same manner as in Example 1 in the obtained resin-metal composite, the blade did not enter the inside of the resin-metal composite. In trying to peel the resin member from the metal member by hand in the same manner as in Example 1, the resin member and the metal member were not peeled from each other because they were firmly joined together. Therefore, in Example 2, it was confirmed that the resin member and the metal member were firmly joined together.

The prepared resin-metal composite was heated in the same manner as in Example 1 except that the temperature was set to 120°C instead of 200°C. Immediately after the heating, a blade was inserted in the same manner as in Example 1. As a result, the blade easily entered the inside of the resin-metal composite, and it was possible to easily peel the resin member from the metal member. Therefore, in Example 2, it was confirmed that in the resin-metal composite, the resin member and the metal member were firmly joined together before heating, but were easily peeled from each other when heated.

### <Example 3>

A liquid varnish was prepared in the same manner as in Example 2. The prepared liquid varnish was put in a tetrafluoroethylene beaker, and heated in a thermostatic bath at 120°C for 4 hours to obtain a cured product. The cured product was taken out from the beaker, and sufficiently ground with a mortar to obtain a powdered cured product. This cured product corresponds to the adhesive layer 3 described with reference to FIG. 6.

On the other hand, a fiber-raiforced plastic (resin member) was prepared in the same manner as in Example 2. The powdered cured product was scattered over the surface of the fiber-raiforced plastic prepared here, and an aluminum plate (metal member) was placed thereon. In other words, the prepared powdered cured product (adhesive layer) was interposed between the fiber-raiforced plastic described in Example 2 and the aluminum plate. The whole thereof was heated and simultaneously pressed at 120°C for 3 hours, and naturally cooled to room temperature to obtain a resin-metal composite having the shape shown in FIG. 1.

In trying to insert a blade in the same manner as in Example 1 in the obtained resin-metal composite, the blade did not enter the inside of the resin-metal composite. In trying to peel the resin member from the metal member by hand in the same manner as in Example 1, the resin member and the metal member were not peeled from each other because they were firmly joined together. Therefore, in Example 3, it was confirmed that the resin member and the metal member were firmly joined together.

The prepared resin-metal composite was heated in the same manner as in Example 1 except that the temperature was set to 120°C instead of 200°C. Immediately after the heating, a blade was inserted in the same manner as in Example 1. As a result, the blade easily entered the inside of the resin-metal composite, and it was possible to easily peel the resin member from the metal member. Therefore, in Example 3, it was confirmed that in the resin-metal composite, the resin member and the metal member were firmly joined together before heating, but were easily peeled from each other when heated.

### <Example 4>

An aluminum plate was immersed in a 0.5% aqueous solution of a silane coupling agent (3-glycidoxypropyltrimethoxysilane) having an epoxy group, and dried in air. Through this operation, the coupling agent 4 described with reference to FIG. 7 was disposed on the surface of the aluminum plate (metal member) . This aluminum plate and the fiber-raiforced plastic (resin member) prepared in Example 2 were then superposed on each other, and the same procedure as in Example 2 was carried out to obtain a resin-metal composite.

In trying to insert a blade in the same manner as in Example 1 in the obtained resin-metal composite, the blade did not enter the inside of the resin-metal composite. In trying to peel the resin member from the metal member by hand in the same manner as in Example 1, the resin member and the metal member were not peeled from each other because they were firmly joined together. Therefore, in Example 4, it was confirmed that the resin member and the metal member were firmly joined together.

The prepared resin-metal composite was heated in the same manner as in Example 1 except that the temperature was set to 120°C instead of 200°C. Immediately after the heating, a blade was inserted in the same manner as in Example 1. As a result, the blade easily entered the inside of the resin-metal composite, and it was possible to easily peel the resin member from the metal member. Therefore, in Example 4, it was confirmed that in the resin-metal composite, the resin member and the metal member were firmly joined together before heating, but were easily peeled from each other when heated.

### <Example 5>

A resin-metal composite was prepared in the same manner as in Example 2. It has been confirmed in Example 2 that the joining strength of a resin-metal composite prepared by this method is high.

Then, in accordance with the conditions of IEC (International Electrotechnical Commission) 68-2-66, the resin-metal composite prepared here was placed in a heating apparatus at a temperature of 130°C and a relative humidity of 85%, and was exposed for 10 hours. After 10 hours, the resin-metal composite was taken out from the heating apparatus, a blade was inserted in the same manner as in Example 1. As a result, the blade particularly easily entered the inside of the resin-metal composite, and it was possible to easily peel the resin member from the metal member. Therefore, in Example 2, it was confirmed that in the resin-metal composite, the resin member and the metal member were firmly joined together before heating, but were particularly easily peeled from each other when heat-treated in a high-temperature and high-humidity environment.

### <Example 6>

A resin member was prepared by crosslinking polymethacrylic acid with a dioxaborane derivative in accordance with Science, 356, pages 62 to 65. The prepared resin member and a stainless steel plate (SUS304, metal member) were superposed on each other, and heated and pressed at 190°C for 1 hour to obtain a resin-metal composite.

In trying to insert a blade in the same manner as in Example 1 in the obtained resin-metal composite, the blade did not enter the inside of the resin-metal composite. In trying to peel the resin member from the metal member by hand in the same manner as in Example 1, the resin member and the metal member were not peeled from each other because they were firmly joined together. Therefore, in Example 6, it was confirmed that the resin member and the metal member were firmly joined together.

The prepared resin-metal composite was heated in the same manner as in Example 1 except that the temperature was set to 120°C instead of 200°C. Immediately after the heating, a blade was inserted in the same manner as in Example 1. As a result, the blade easily entered the inside of the resin-metal composite, and it was possible to easily peel the resin member from the metal member. Therefore, in Example 6, it was confirmed that in the resin-metal composite, the resin member and the metal member were firmly joined together before heating, but were easily peeled from each other when heated.

### <Comparative Example>

As a comparative example, a resin composition (resin member) was prepared by the same method as described in Comparative Example 1 in Japanese Patent No. 5749354 except that a partial change was made. The resin composition prepared here does not have a dynamic covalent bond. First, 10.7 g of DER332 Epoxy Resin (manufactured by The Dow Chemical Company) was put in a beaker. Further, 3.5 g of glutaric anhydride was added, the beaker was placed in a thermostatic bath and heated, and the mixture was mixed until the mixture was completely dissolved. Using the homogenized solution, the same procedure as in Example 1 was then carried out to obtain a flat plate-shaped resin composition (resin member) and a resin-metal composite having the shape shown in FIG. 1.

When a metallic blade was inserted at the boundary between the resin member and the metal member in this resin-metal composite, the blade easily entered the inside of the resin-metal composite, and the resin member and the metal member were easily separated from each other. Therefore, it was confirmed that the resin-metal composite prepared here was different from that in Example 1 in that the resin member and the metal member were bonded to each other merely with thermocompression bonding, and thus there was only loose joining between these members.

### Reference Signs List

- 1: resin member
- 2: metal member
- 3: adhesive layer
- 4: coupling agent
- 10: resin-metal composite
- 20: resin-metal composite
- 30: resin-metal composite

## Claims

1. A resin-metal composite comprising:
a metal member; and
a resin member that joins to the metal member and has a dynamic covalent bond capable of reversibly dissociating and bonding with regard to a functional group present on a surface of the metal member.

2. The resin-metal composite according to claim 1, wherein the resin member contains a fiber.

3. The resin-metal composite according to claim 1 or 2, wherein the metal member and the resin member are joined to each other with an adhesive layer interposed therebetween.

4. The resin-metal composite according to claim 1 or 2, wherein a coupling agent capable of bonding to the dynamic covalent bond of the resin member is disposed on the surface of the metal member, and the metal member and the resin member are joined to each other with the coupling agent interposed therebetween.

5. A method for preparing a resin-metal composite containing a metal member, and a resin member that joins to the metal member and has a dynamic covalent bond capable of reversibly dissociating and bonding with regard to a functional group present on a surface of the metal member,
the method comprising bringing the metal member and the resin member into contact with each other, and then heating the contact part to join the metal member and the resin member to each other.

6. A method for dismantling a resin-metal composite containing a metal member, and a resin member that joins to the metal member and has a dynamic covalent bond capable of reversibly dissociating and bonding with regard to a functional group present on a surface of the metal member,
the method comprising heating a joining part between the metal member and the resin member to release joining of the metal member and the resin member, so that the metal member and the resin member are separated from each other to dismantle the resin-metal composite.
